(19) Europäisches Patentamt / European Patent Office / Office européen des brevets

(11) **EP 3 767 566 A1**

(12) **EUROPEAN PATENT APPLICATION**

(43) Date of publication:
20.01.2021 Bulletin 2021/03

(51) Int Cl.:
*G06Q 10/08* (2012.01)

(21) Application number: **19187211.8**

(22) Date of filing: **19.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mettler-Toledo GmbH**
**8606 Greifensee (CH)**

(72) Inventor: **Selbmann, Bernd**
**8047 Zürich (CH)**

(74) Representative: **Mettler-Toledo**
**IP Department**
**Im Langacher 44**
**8606 Greifensee (CH)**

(54) **METHOD AND SYSTEM FOR COLLECTING BATCHES OF ARTICLES**

(57) The present invention is related to a method, a system and a computer program for collecting N > 1 batches of predetermined numbers of identical articles from a stock, and to a computer-readable data carrier having stored thereon the computer program mentioned above.

Fig. 1

EP 3 767 566 A1

**Description**

The present invention relates to a method, a system and a computer program for collecting N>1 kits, packages or batches of any sort (hereafter referred to as batch) of predetermined numbers of identical articles from a stock and to a computer-readable data carrier having stored there on the computer program mentioned above.

Collecting articles according to a predetermined bill of material, short BOM herein, from a stock is a common task in various industries. Generally, batches of mixed articles are formed, and these batches are gathered in a package to be shipped to a customer. Examples include the packaging of spare parts, accessories and repair items as well as the preparation of packaged assemblies, like toy kits, component kits for furniture, buildings and machines.

In many cases, the collection of articles is not an automated process and is carried out by a human operator. Thus, the collection of articles and the preparation of packages to be shipped to a customer is error prone.

Since packages with missing parts result in customer complaints, a completeness check of the collected and packaged articles is necessary. Conventionally, such a completeness check is performed at the end of the collection process before the packed package is shipped to a customer. Known methods, including a visual check by a human operator or an X-ray analysis, take time and are expensive. Alternatively, a completeness check by weighing the package before shipment is performed. However, such a weight check is only possible if the variance of the total weight of the package is smaller than the weight of the article inside the package having the smallest weight. Consequently, such a weight check is not possible for packages with a mixture of heavy and light articles. Oftentimes small parts get lost in such kind of picking and packaging operations.

Another problem of the completeness checks mentioned above is that these completeness checks are performed at the end when the whole package is already packed. Consequently, the whole content of the package must be checked, which is time consuming.

In the light of these problems in the prior art it is the object of the present invention to further develop a method, a system and a computer program for collecting batches of articles from a stock in such a way that a quick collection of the batches with minimal error is facilitated.

According to a first aspect of the present invention, this object is attained by a method for collecting N > 1 batches $B_i$, i = 1, ..., N of predetermined numbers $n_i$ of identical articles $A_i$ from a stock of articles on the basis of a first information $a_i$ which identifies the article $A_i$ and a second information $w_i$ which indicates the weight of the article $A_i$, wherein each of said batches $B_i$ is collected by

a weighing step comprising a weighing operation of articles $A_i$ identified by said first information $a_i$ to be collected in batch $B_i$, said weighing operation starting with some initial quantity of articles $A_i$, and then varying the number of articles $A_i$ until a counting value $C_i$ defined as the absolute value of a difference between an initial weight value $w_i(0)$ measured at the starting of the weighing operation and a current weight value $w_i(t_c)$ divided by the weight of the article $A_i$ indicated by the second informa-

$$C_i = \frac{|w_i(0) - w_i(t_c)|}{w_i},$$

tion $w_i$, i.e., corresponds to said predetermined number $n_i$ of articles $A_i$ of batch $B_i$, whereby the collection of batch $B_i$ is completed, and starting the collection of a next batch $B_{i+1}$ of identical articles $A_{i+1}$ only after the collection of batch $B_i$ is completed.

According to the method of the first aspect of the present invention it is secured that for each batch $B_i$ of articles the correct predetermined number $n_i$ of articles $A_i$ is collected. Thus, contrary to the prior art, a completeness check at the end of the collection process is not necessary. Hence, the method according to the first aspect of the present invention allows for a quick collection of the batches without any error.

According to the first aspect of the present invention, there is a given stock of articles $A_i$, i = 1 ... M. For i ≠ j, article $A_i$ is different from article $A_j$. Generally, more than one copy of article $A_i$ is present in the stock. An example of such stock is a warehouse storing the articles $A_i$. Each article is identified by a first information $a_i$. The first information $a_i$ allows for a unique identification of the article $A_i$. $a_i$ can be a sequence of characters, e. g. letters or numbers, or a combination thereof. One exemplary example of such a first information is "screw M5, 2 cm long".

The second information is the weight $w_i$ of article $A_i$. For two identical articles $A_i$, the weight $w_i$ is identical within some error tolerance. Thus, each article $A_i$ is characterized by a tuple $(a_i, w_i)$. For two different articles $A_i$, $A_j$, the weight $w_i$ and $w_j$ can be identical or they can be different from another.

A batch $B_i$ to be collected is a collection of a number of $n_i$ identical articles $A_i$. Each batch $B_i$ is associated with a tuple $(a_i, n_i)$, characterizing the article $A_i$ to be collected via the first information $a_i$ and the respective number $n_i$ of articles $A_i$ in the batch $B_i$. For two different batches, $B_i$, $B_j$ the articles to be collected can be the same or they can be different from each other, i. e. $a_i = a_j$ or $a_i \neq a_j$. Furthermore, for the two batches $B_i$, $B_j$ the number of articles in each batch can be identical or it can be different, i. e. $n_i = n_j$ or $n_i \neq n_j$.

The set of batches $B_i$ to be collected can be determined by a predetermined bill of material (BOM) B. The bill of material can e. g. be provided in the form of a list of tuples, $(a_1, n_1), (a_2, n_2), ... (a_N, n_N)$. Given such bill of material B, it is determined that $n_1$ pieces of article $A_1$,

$n_2$ pieces of article $A_2$ and so on have to be collected.

The collection of batches $B_1, ..., B_N$ may contain identical subsets of collection of batches. For example, if K x N batches $B_1, ..., B_{KxN}$ are collected, the subset of batches $B_1, ..., B_N$ may be identical to the subset $B_{N+1}, ... B_{2N}$ of batches, and so forth, i. e. $B_i = B_{(i+m \cdot N)}$ for i = 1, ..., N and m = 0, ..., K-1. In other words, the collection of batches corresponds to K identical collections of articles according to the bill of material B defined above. For example, it may be desirable to prepare K = 5 identical collections of batches, e.g. 5 identical packages, each comprising a batch of 2 screws and a batch of 4 nuts.

The first information $a_i$ identifying the articles $A_i$ to be collected in batch $B_i$ may be displayed on a display means. The display means may be a display means that is a part of a weight measuring means (see below). Alternatively, the display means may be a display means that is connectable to the weight measuring means. The display means may be a display, for example a monitor. The display means may also display the predetermined number $n_i$ of articles $A_i$ to be collected in batch $B_i$.

In one example, the display means may display the first information $a_i$ identifying the articles $A_i$ to be collected in batch $B_i$ and the predetermined number $n_i$ of articles $A_i$ in batch $B_i$ only for the weighing step of the next batch $B_i$. This provides clear and unambiguous instructions to an operator on how to prepare the collection of batches $B_i$. This simplifies the collection of batches for the operator. Alternatively, the display means may display the first information $a_i$ and the predetermined number $n_i$ for several batches to be collected.

Given the information ($a_i$, $n_i$) regarding the batches $B_i$ to be collected, the method is as follows:

In order to collect the predetermined number $n_i$ of articles $A_i$ in a given batch $B_i$, a weighing step is to performed. The weighing step can be performed using a weight measuring means, e. g. a scale or a balance. The weight measuring means may be any means that allows to measure the weight of articles at a starting point and at a later point in time. It is known, e. g. from the respective bill of material ($a_1$, $n_1$), ($a_2$, $n_2$), ..., ($a_N$, $n_N$) that $n_i$ pieces of article $A_i$ identified by the first information $a_i$ are to be collected in batch $B_i$.

Generally, the collection of batches will be performed in the order determined by the bill of material. I.e., for a bill of material ($a_1$, $n_1$), ($a_2$, $n_2$), ..., ($a_N$, $n_N$), first, the batch $B_1$ according to ($a_1$, $n_1$) is collected. I.e. $n_1$ articles $A_1$ identified by the first information $a_1$ are collected. Next, batch $B_2$ according to ($a_2$, $n_2$) is collected, and so on. In the following description of the invention, it will be assumed that the collection of batches will be performed in this order. However, it is also possible to collect the batches in a different order.

Next, the collection of batch $B_i$ will be explained. Batch $B_i$ is collected using the weighing step according to the present invention. At starting of the weighing step for batch $B_i$, some initial quantity of articles $A_i$ is arranged on the weight measuring means and the initial weight value $w_i(0)$ is measured by the weight measuring means. The initial quantity may be some volume or number of articles $A_i$, known or unknown to the operator. Optionally, a tare operation may be performed before starting of the weighing step. The tare operation may be automatically performed by the weight measuring means. Alternatively, the tare operation may be performed at an operator's demand. The tare operation may also be performed after the initial quantity of articles $A_i$ is put on the weight measuring means and before the initial weight value $w_i(0)$ is measured.

Once the initial weight value $w_i(0)$ has been measured, the number of articles $A_i$ in the initial quantity of articles $A_i$ is varied. This can be achieved by adding articles $A_i$ to the initial quantity of articles $A_i$ or by removing articles $A_i$ from the initial quantity of articles $A_i$. While the number of articles $A_i$ is varied, the current weight value $w_i(t_c)$ of the number of articles $A_i$ which are currently weighed by the weight measuring means is measured. This measurement may be continuous in time, or it may be performed after each step of adding or removing articles $A_i$ to or from the initial quantity of articles $A_i$. The current weight value $w_i(t_c)$ may be displayed on the display means.

Given the measured current weight value $w_i(t_c)$ and the second information $w_i$, the counting value $C_i$ defined as the absolute value of a difference between the initial weight value $w_i(0)$ and the current weight value $w_i(t_c)$ divided by the weight $w_i$ of article $A_i$,

$$C_i = \frac{|w_i(0) - w_i(t_c)|}{w_i}$$ is calculated.

Generally, $C_i$ is equal to or very close to an integer number. Generally, nearest integer to $C_i$, [$C_i$] corresponds to the absolute value of the difference between the initial number of articles $A_i$ in the initial quantity of articles $A_i$ at starting of the weighing operation and the current number of articles $A_i$ on the weight measuring means. I.e., the weighing step "counts" the variation of the number of articles $A_i$ arranged on the weight measuring means. Thus, the weight measuring step can be called a "counting step".

The calculation of $C_i$ may be performed by a calculation means. The calculation means may be means for electronic data processing, including, but not limited to a computer. When the counting value $C_i$ corresponds to the predetermined number $n_i$, i. e. when $C_i = n_i$ up to some error tolerance, for example, when [$C_i$] = $n_i$ wherein [$C_i$] is the nearest integer to $C_i$, the collection of batch $B_i$ of articles $A_i$ is completed. $n_i$ articles $A_i$ are now collected in batch $B_i$.

Next, a tare operation of the weight measuring means may be optionally performed before starting the collection of the next batch $B_i$. Before starting the collection of the next batch $B_i$, the articles weighed by the weight measuring means may be removed from the weight measuring means, or the articles may be left on the weight measuring means.

The method proceeds then with the collection of the next batch $B_{i+1}$. However, the method only proceeds with the collection of the next batch $B_{i+1}$ after the collection of batch $B_i$ with the predetermined number $n_i$ of articles $A_i$ is completed. Thus, the method according to the first aspect of the present invention guarantees that the correct predetermined number $n_i$ of articles $A_i$ is collected in a given batch $B_i$. Hence, contrary to the prior art, a completeness check at the end of the method is not necessary.

The method may further comprise a printing step. The printing step may be carried out after the collection of a batch is completed. Additionally or alternatively, the printing step may be carried out when the collection of all batches is completed. In the printing step, information related to the completed batch or batches, e.g., information identifying the articles in the batch, their weight, the predetermined number of articles in the batch and so forth may be printed out. Furthermore, information related to the complete collection of batches $B_i$, i = 1, ..., N may be printed out.

In one embodiment of the method according to the first aspect of the present invention, the number of articles $A_i$ in the initial quantity of articles $A_i$ may be zero for at least one weighing step. This embodiment is denoted as "picking-in mode". In the following, two examples of the picking-in mode will be described, but other implementations of the picking-in mode may be possible.

According to a first embodiment of the picking-in mode, the collection of batches $B_i$ is gathered on a weight measuring means as follows: A package may be arranged on the weight measuring means, and the collection of batches may be gathered in the package. However, such a package is not necessary, and the articles may be gathered on the weight measuring means without a package. In case that a package is initially arranged on the weight measuring means, a tare operation may be optionally performed before the collection of articles is started.

Now, the collection of batches will be described for batch $B_i$. Batch $B_i$ is collected with the help of the weighing step. The initial quantity of articles $A_i$ for batch $B_i$ on the weight measuring means is chosen to be zero, i.e. no articles $A_i$ to be collected in batch $B_i$ are arranged on the scale at the starting of the weighing step for batch $B_i$. Then, the initial weight value $w_i(0)$ is measured. In case that the tare operation is performed, the initial weight value $w_i(0)$ is zero. In case that no tare operation is performed, the initial weight value $w_i(0)$ may be bigger than zero as batches $B_j$, j = 1, ..., i-1 may already be arranged on the weight measuring means. Then, the number of articles $A_i$ for batch $B_i$ on the weight measuring means is varied. This can be achieved by putting articles $A_i$ onto the weight measuring means, and optionally into the package, if present, until the counting value $C_i$ obtained

from the measured current weight value $w_i(t_c)$, the initial weight value $w_i(0)$ and the weight $w_i$ of article $A_i$,

$$C_i = \frac{|w_i(0) - w_i(t_c)|}{w_i}$$

corresponds to the predetermined number $n_i$ of articles $A_i$ of batch $B_i$. The articles $A_i$ can be put on the weight measuring means one by one. Alternatively, a greater number of articles $A_i$ can be put onto the weight measuring means simultaneously. It is also possible that during the variation of the number of articles the counting value $C_i$ becomes bigger than the predetermined number $n_i$ of articles $A_i$. Then, articles $A_i$ are removed from the weight measuring means to arrive at the desired counting value $C_i$. When the counting value $C_i$ corresponds to the predetermined number $n_i$ of articles $A_i$, the batch $B_i$ is completed.

The completed batch $B_i$ is then left on the weight measuring means. Then, the collection of the next batch $B_{i+1}$ is started using the weighing step explained above with the articles $A_{i+1}$ identified by the first information $a_{i+1}$ of batch $B_{i+1}$. Optionally, a tare operation is performed before starting the collection of the next batch $B_{i+1}$.

The embodiment of the picking-in mode explained above allows for a particularly quick completion of the collection of batches. In this description, the embodiment described above is denoted as "picking-in vertical mode".

In an alternative embodiment of the picking-in mode, each completed batch $B_i$ is removed from the weight measuring means before the collection of a next batch is started. In particular, this second embodiment of the picking-in mode can be carried out as follows: The collection of batch $B_i$ is started with zero articles $A_i$ arranged on the weight measuring means. Optionally, a tare operation may be performed. Then, the weighing step is performed. To this end, the initial weight value $w_i(0)$ is measured by the weight measuring means. Next, the number of articles $A_i$ on the weight measuring means is varied, as described above, until the counting value $C_i$ corresponds to the predetermined number $n_i$ of articles $A_i$. Again, this includes putting articles $A_i$ onto the weight measuring means in case that the counting value $C_i$ is smaller than the predetermined number $n_i$. In case that the counting value $C_i$ becomes larger than the predetermined number $n_i$ of articles $A_i$, articles $A_i$ are removed from the weight measuring means. When the counting value $C_i$ corresponds to the predetermined number $n_i$ of articles $A_i$ of batch $B_i$, the variation of the number of articles on the weight measuring means is stopped. The collection of batch $B_i$ is completed, and the articles $A_i$ arranged on the weight measuring means form batch $B_i$. Next, the articles $A_i$ on the weight measuring means forming batch $B_i$ are removed from the weight measuring means. The completed batch $B_i$ may be gathered in a package. Then, the method proceeds with the collection of the next batch $B_{i+1}$ as described above with the help of the weighing step.

The embodiment of the picking-in mode described above is also denoted as "picking-in horizontal mode" in this description.

The embodiment of the horizontal picking-in mode explained above is preferable for a collection of batches $B_i$ wherein the variation of the weight of the articles to be collected in the different batches is large. In this way, a very precise counting of the number of articles in each batch via the counting value $C_i$ can be achieved even for the articles with the smallest weight in the collection of batches.

In another embodiment of the present invention, the number of articles $A_i$ in the initial quantity of articles $A_i$ may be equal to or larger than the predetermined number $n_i$ of articles $A_i$ of batch $B_i$ for at least one weighing step. This embodiment is denoted as picking-out mode.

A possible implementation of the method according to this embodiment of the present invention is as follows:

The articles $A_i$ to be collected in batch $B_i$ may be stored in a storage container in the stock. One single storage container contains only identical article. The storage container may contain a large number of articles. The number of articles in the storage container may be known or unknown.

The storage container is then put on the weight measuring means. The initial quantity of articles is thus the number of articles in the storage container. After putting the storage container onto the weight measuring means, a tare operation may be performed. Then, the weighing step is carried out. The weight measuring means measures the initial weight value $w_i(0)$ at the starting. If no tare operation is performed, the initial weight value $w_i(0)$ is the sum of the weight of the storage container and the weight of all the articles in the storage container. One or several packages for receiving the articles $A_i$ of batch $B_i$ may be arranged next to the weight measuring means.

Next, the initial number of articles is varied. To this end, articles $A_i$ stored in the storage container are removed from the storage container and from the weight measuring means. The articles removed from the storage container may be gathered at a location next to the weight measuring means, e. g. inside one of the packages. Again, the articles $A_i$ may be removed one by one from the storage container. Alternatively, a larger amount of articles $A_i$ may be removed from the storage container at one time. Meanwhile, the weight measuring means measures the current weight value $w_i(t_c)$ of the storage container and the articles $A_i$ left in the storage container. At the same time, the counting value $C_i$ as defined above is calculated and compared to the predetermined number $n_i$ of articles $A_i$. In case that the counting value $C_i$ becomes larger than the predetermined number $n_i$ of articles $A_i$, articles $A_i$ that have been removed from the storage container must be put back into the storage container. When the counting value $C_i$ corresponds to the predetermined number $n_i$ of articles $A_i$, the variation of the number of articles gathered in the storage container is stopped. Then, the articles $A_i$ removed from the storage container form batch $B_i$. This batch may be gathered in one package. The method then proceeds with the collection of the next batch $B_{i+1}$.

The next batch may be a collection of the articles gathered in the storage container which is already arranged on the weight measuring means. Then, the method continues with the weighing step explained above. Before the weighing step, a tare operation may be optionally performed.

Alternatively, the next batch may be a collection of articles that are different from the ones in the previously collected batch. The storage container is then removed from the weight measuring means and a storage container containing the articles to be collected in the next batch $B_{i+1}$ is arranged on the weight measuring means. Then, the method proceeds with the weighing step explained above.

This method is especially suited for the case when a collection of batches according to K copies of one bill of material is to be prepared. Then, each subset of batches corresponding to one copy of the bill of material may be packed in a package. In this way, K packages with identical content can be prepared.

In this case, it is preferable to collect K identical batches of articles $A_i$ one directly after another before collecting K identical batches of articles $A_j$. That is, the storage container containing the articles $A_i$ remains on the weight measuring means while the K identical batches are collected. Then, the storage container is removed from the weight measuring means. Another storage container containing different articles $A_j$ is put on the weight measuring means and the collection of K identical batches of the articles $A_j$ in the container is started.

In a further embodiment of the present invention, the number of articles in the initial quantity of articles $A_i$ may be chosen based on the batches $B_i$ to be collected for at least one weighing step. This includes, but is not limited to, choosing between the two possibilities of the picking-in mode and the picking-out mode. The choice of the number of articles in the initial quantity of articles may be predetermined. For example, this choice may be stored in the bill of material. Alternatively, an operator may choose the respective mode based on his or her preferences.

The first information $a_i$ and the second information $w_i$ may be stored in and retrieved from a database. The database may be part of a database system. The database may be part of an Enterprise-Resource-Planning (ERP) or production system of any sort. The database system may also be included in the weight measuring means. In one example, the weight measuring means may comprise data storing means, i.e. a memory in which the database is stored. The memory may be a hard disk or a cloud storage. Alternatively, the weight measuring means may be connectable to the database system. The connection may be via Ethernet. Additionally or alternatively, the connection may be a wireless data connection.

Additionally, or alternatively, predetermined bills of material may be stored in and be retrievable from the database. There are, however, also embodiments where the bill of material may be prepared based on a customer demand.

In another embodiment of the present invention, the method may comprise, for at least one batch $B_i$, an article verification step wherein it is verified whether the articles weighed in the weighing step are identical to the articles $A_i$ identified by the first information $a_i$.

The article verification step may be performed before the initial weight value $w_i(0)$ is measured. Alternatively, the article verification step may be carried out while the number of articles in the initial number of articles is varied, or it may be carried out after it is determined that the counting value $C_i$ corresponds to the predetermined number $n_i$ of articles $A_i$, i.e. when a given batch is completed.

The article verification step may be performed by a human operator. Alternatively, the article verification step may be performed by a machine. For example, an operator may be well trained so that he/she is capable of carrying out a visual article verification step. Alternatively, the first information $a_i$ may be attached to article $A_i$ in some form. For example, the first information $a_i$ may be written on article $A_i$. In another embodiment, the first information $a_i$ may be contained in a bar code that is attached to article $A_i$. Then, an operator may read out the first information $a_i$ with a barcode reader. The article verification step improves process reliability.

The method may be adapted such that the method does not proceed in case that the article verification step reveals that the articles weighed in the weighing step are not identical to the articles $A_i$ identified by the first information $a_i$. This further enhances process reliability.

The method may also include packing the collected batches in one or several packages.

In this case, the method may comprise a package selection step in which a package for receiving the articles $A_i$ of at least some of the batches $B_i$ is selected from a stock of packages. The selection of the package may be based on a given package information $p_i$ identifying the package to be selected. $p_i$ may be predetermined for a certain collection of batches $B_i$. The information regarding the package to be selected may be contained in the bill of material. Alternatively, an operator may be free to choose a package which he/she considers as appropriate for a certain batch $B_i$. The packages may be made of any appropriate material, including cardboard, paper, plastic and so on. The method may comprise selecting only one package for receiving the whole collection of batches $B_i$ of articles $A_i$. Alternatively, the method may comprise selecting, for at least some of the batches $B_i$, an individual package. Two or more batches, each collected in their own package or not, may be gathered in one larger common package.

Each package of the collection of packages may be identified by a package information $p_i$, and the method may comprise a package verification step wherein it is verified whether the package selected in the package selection step is identical to the package identified by the given package information $p_i$. The package verification step improves process reliability. The package information $p_i$ may be a size, a volume, a material, a color or any other information related to the individual package. The information $p_i$ may also be represented by a bar code attached to the package. The package verification step may be carried out by a human operator or by a machine. For example, the package verification step may be performed by an operator checking visually if the selected package is identical to the package identified by a predetermined package information $p_i$. In another example, the operator may use package verification means, e. g. a bar code reader to scan a bar code attached to the package. The stock of packages may contain several packages, each characterized by the identical package information $p_i$. For example, packages of the same size or volume may be characterized by the same package information $p_i$. The package verification step enhances process reliability.

The method may be further adapted such that the method does not proceed in case that the package verification step reveals that the selected package is not identical to the package identified by the predetermined package information $p_i$. This further enhances process reliability.

In a further embodiment of the present invention, a third information which is a function of the counting value $C_i$ and/or a fourth information which is a function of the number of completed batches $B_i$ may be displayed on a display means. The third information may include a numerical representation of the counting value $C_i$ or its nearest integer $[C_i]$. Additionally, or alternatively, the third information may be represented as a bar on the display means, wherein the length of the bar corresponds to the numerical value of the counting value $C_i$.

Additionally, or alternatively, the third information may also include information that is a function of both the counting value $C_i$ and the predetermined number $n_i$ of articles $A_i$ to be collected in batch $B_i$. For example, this information may represent if the counting value $C_i$ is smaller than, equal to or larger than the predetermined number $n_i$ of articles $A_i$. This information may then be displayed via three different colors or three different symbols on the display means. That is, when the counting value $C_i$ is smaller than the predetermined number $n_i$, the display means may display a first color or a first symbol. When $C_i$ corresponds to $n_i$ or is close to $n_i$, the display means may display a second color or a second symbol which is different from the first color/first symbol. When $C_i$ is larger than $n_i$, the display means may display a third color or a third symbol which is different from the first color/first symbol and the second color/second symbol. Additionally or alternatively, the third information may be represented as a bar on the display means wherein the length of the bar corresponds to the numerical value of $C_i$. In this way, the method can be carried out by an operator who has received only minimal training.

The fourth information may be a numerical representation of the number of completed batches $B_i$. The fourth information may be represented as a bar on the display means, wherein the length of the bar corresponds to the number of completed batches $B_i$. By displaying the fourth information, the operator has a reference point regarding the progress of the collection process.

The display means on which the third information and/or the fourth information are displayed may be the same display means as the one on which the first information $a_i$ and/or the predetermined number $n_i$ are displayed. Alternatively, the two display means may be different display means.

According to another embodiment of the first aspect of the present invention, the method may comprise, prior to at least one weighing step, a weight measuring means selection step in which a weight measuring means for carrying out the weighing operation of the following weighing step is selected from a set of weight measuring means. The set of weight measuring means may comprise two or more weight measuring means. The weight measuring means of the set may have different properties. For example, the weight measuring means of the set may have a different resolution. Such an embodiment is particularly suitable when articles with very different weight are to be collected in the batches $B_i$. Then, a first weight measuring means with a very high resolution may be used for the collection of light articles and a second weight measuring means with less resolution may be used for the collection of the heavy articles. In another example, it might be required to collect batches of articles with very different size. Then, the set of weight measuring means may include weight measuring means that account for the different sizes of the articles $A_i$ to be weighed.

A second aspect of the present invention is a system for collecting N > 1 batches $B_i$, i = 1, ..., N of predetermined numbers $n_i$ of identical articles $A_i$ from a stock of articles on the basis of a first information $a_i$ which identifies the article $A_i$ and a second information $a_i$ which indicates the weight of the article $A_i$, the system comprising:

- a data base for storing an inventory of a stock of articles, said inventory including, for each article $A_i$ in the stock, said first information $a_i$ and said second information $w_i$;
- weight measuring means for measuring for a given batch $B_i$, at a starting point, an initial weight value $w_i(0)$ of an initial quantity of articles $A_i$ identified by said first information $a_i$ and for measuring, at a later point in time, $t_c$, a current weight value $w_i(t_c)$;
- calculation means for calculating for a given batch $B_i$ a counting value $C_i$ defined as the absolute value of the difference between the initial weight value $w_i(0)$ and the current weight value $w_i(t_c)$ divided by the weight of the article $A_i$ identified by the second

$$C_i = \frac{|w_i(0) - w_i(t_c)|}{w_i};$$

information $w_i$,
- comparing means for comparing for a given batch $B_i$ the counting value $C_i$ calculated by the calculation means with the predetermined number $n_i$ of articles $A_i$ of said batch $B_i$.

The system according to the second aspect of the present invention allows to implement the method according to the first aspect of the present invention.

The weight measuring means may be any weight measuring means that allows to measure a weight value at a starting point and at a later point in time. For example, the weight measuring means may be a scale or a balance.

The database may be any database that allows for storing an inventory of a stock of articles. The database may be a list including, for each article $A_i$, said first information $a_i$ and said second information $w_i$. I. e., the data base may contain for each article $A_i$ a tuple ($a_i$, $w_i$). As for the method, the database may be stored in a data storage means, i.e. a memory. The memory may be part of a device for electronic data processing, including, but not limited to a computer device. The memory may be included in the weight measuring means. Alternatively, the memory may be connectable to the weight measuring means. The connection may be via Ethernet. The memory may be any data carrier, including, but not limited to a hard disk, a memory stick or a cloud storage. There may be wireless communication between the database and the weight measuring means.

The system may further be provided with a database system comprising a database management system and associated applications as well as the data base. The database management system comprises a software that interacts with an end user, the associated applications and the database. The database may be part of an ERP system.

The calculation means may be adapted to communicate with the weight measuring means to obtain the initial weight value and the current weight value. Furthermore, the calculation means may be adapted to communicate with the database to obtain the initial weight value.

The comparing means may be adapted to communicate with the calculation means to obtain the calculated counting value. Furthermore, the comparing means may be adapted to obtain the predetermined number of articles determined by the bill of material.

The calculation means and the comparing means for comparing the counting value $C_i$ with said pre-

determined number $n_i$ of a batch $B_i$ may be electronic data processing means, including but not limited to a personal computer. The calculation means and the comparing means may be incorporated in the weight measuring means. Alternatively, the comparing means and/or the calculation means may be components that are separate from the weight measuring means.

The system mentioned above may be implemented by a weight measuring means, e. g. a scale or a balance which includes, in a memory, the data base and/or the data base system. The scale or balance may be provided with means for electronic data processing that allow to carry out the function of the calculation means and the comparing means.

In an embodiment of the present invention, the system may further comprise means for creating and/or for storing bills of material B of collections of batches $B_i$. Each bill of material includes the first information $a_i$ which indicates the article $A_i$ and the predetermined number $n_i$ of said article $A_i$ of the batch $B_i$ to be collected $(a_i, n_i)$, as explained above. The means for storing bills of material may be memory means. The memory means may be identical to the memory on which the database is stored. However, the system may also include different memories for the database and for the bills of material. Additionally or alternatively, a user may be able to prepare, from the stock of articles, a new bill of material, for example according to a customer demand.

The system may further comprise display means for displaying the first information $a_i$ corresponding to a batch $B_i$ and/or the predetermined number $n_i$ of articles $A_i$ of batch $B_i$ and/or the second information $w_i$ and/or a third information which is a function of the counting value $C_i$ and/or a fourth information which is a function of the number of completed batches $B_i$. The third information related to the counting value $C_i$ may be displayed on the display means in a form that is explained above in relation to the method. I. e., the display means may display a numerical value of $C_i$ or $[C_i]$, or the display means may display a relation between $C_i$ and the predetermined number $n_i$, e. g. by three different colors or symbols, depending on whether $C_i < n_i$, $C_i = n_i$ or $C_i > n_i$. The fourth information may be displayed on the display means in a form that is explained above in relation to the method.

The system may further comprise article verification means for verifying whether an article to be weighed by the weight measuring means is identical to an article $A_i$ identified by the first information $a_i$. The article verification means may be a barcode reader, and the first information $a_i$ may be attached to each article $A_i$ in the form of a barcode.

The system may further comprise package verification means for verifying whether a package selected for receiving at least one batch $B_i$ is identical to a package identified by a predetermined package information $p_i$.

The package verification means may be a barcode reader, and the package information $p_i$ may be a barcode attached to the package. The predetermined package information $p_i$ may be included in the bill of material which determines the collection of batches.

The article verification means and the package verification means may be one device, e.g. one barcode reader that allows to verify both, the articles and the package.

According to another embodiment, the weight measuring means may comprise two or more weight measuring means. As it was explained above in relation to the method according to the first aspect of the invention, the two or more weight measuring means may have different properties. E. g., they might have a different resolution or a different size. It may be determined e.g. by the bill of material which weight measuring means is to be used for measuring the weight of the articles of one given batch $B_i$.

A third aspect of the present invention is a computer program for collecting $N > 1$ batches $B_i$, i = 1, ..., N of predetermined numbers $n_i$ of identical articles $A_i$ from a stock of articles on the basis of a first information $a_i$ which identifies the article $A_i$ and a second information $w_i$ which indicates the weight of the article $A_i$, the computer program comprising instructions which, when the program is executed by a computer, cause the computer to carry out the following steps:

- retrieving, for a batch $B_i$, the first information $a_i$ and the second information $w_i$ from a data base;
- retrieving for the given batch $B_i$ from a weight measuring means at a starting point an initial weight value $w_i(0)$ of an initial quantity of articles $A_i$ to be collected in said batch $B_i$, the articles $A_i$ being identified by said first information $a_i$, and, at a later point in time $t_c$ a current weight value $w_i(t_c)$;
- calculating, for the given batch $B_i$, a counting value $C_i$ defined as the absolute value of the difference between the initial weight value $w_i(0)$ and the current weight value $w_i(t_c)$ divided by the weight of the article $A_i$ identified by the second information $w_i$,

$$C_i = \frac{|w_i(0) - w_i(t_c)|}{w_i} \; ;$$

- comparing the counting value $C_i$ and the predetermined number $n_i$ of articles $A_i$ of said batch $B_i$, and if the counting value $C_i$ corresponds to the predetermined number $n_i$, providing an output to an output means that $C_i$ corresponds to $n_i$; and
- returning to retrieving the first information $a_{i+1}$ and the second information $w_{i+1}$ of a next batch $B_{i+1}$ only after it is determined that the counting value $C_i$ corresponds to the predetermined number $n_i$ of articles $A_i$ of batch $B_i$.

The computer program according to the third aspect of the present invention allows to carry out the method according to the first aspect of the present invention. Furthermore, the computer program according to the third aspect of the present invention may be used in the system according to the second aspect of the present invention. The computer program may further be adapted to carry out all the optional steps mentioned in relation to the method.

A fourth aspect of the present invention is a computer readable data carrier having stored thereon the computer program according to the third aspect of the present invention.

In the following description, the invention will be described in greater detail by way of example, with reference to the drawings. In the drawings,

Fig. 1 is a schematic view of an embodiment of the system according to the present invention,

Fig. 2 is a schematic flow chart of a first embodiment of the method according to the present invention, which is an example of the picking-in horizontal mode,

Fig. 3 is a schematic flow chart of a second embodiment of the method according to the present invention, which is an example of the picking-in vertical mode,

Fig. 4 is a schematic flow chart of a third embodiment of the method according to the present invention, which is an example of the picking-out mode.

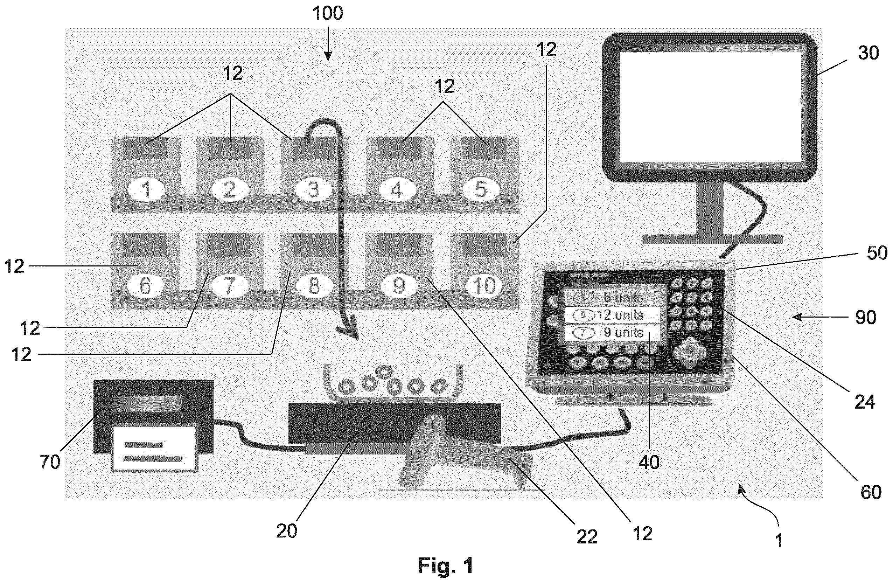

Fig. 1 shows a schematic view of a system 1 according to the present invention. Fig. 1 also shows a stock 100 of articles $A_i$, i = 1, ..., 10. The articles $A_i$ are identified by a first information $a_i$, which in the present example is represented by a number $a_i$ ranging from 1 to 10. Identical articles $A_i$ are stored in individual storage containers 12 which are labelled with the first information $a_i$.

The system 1 comprises weight measuring means 20 in the form of a scale. The scale 20 is adapted to measure an initial weight value $w_i(0)$ of articles put on the scale 20. Furthermore, the scale 20 is adapted to measure a current weight value $w_i(t_c)$ at a current time $t_c$. The scale 20 may be adapted to perform a tare operation. Furthermore, the system comprises a database incorporated in a database system 30. The database stores an inventory of the stock 100. Said inventory includes for each article $A_i$ in the stock 100, said first information $a_i$ and a second information $w_i$ which indicates the weight of the article $A_i$. That is, for each physical article $A_i$, the database comprises a tuple of information $(a_i, w_i)$.

The system 1 further comprises display means 40. In the embodiment of the system 1 shown in Fig. 1, the display means 40 is a component which is separate from the scale 20 and which is connectable to the scale 1. In the embodiment shown in Fig. 1, the display means 40 is included in a device 90.

In Fig. 1, display means 40 displays part or all of a bill of material B (BOM). As explained above, a bill of material includes for each batch $B_i$ the first information $a_i$ indicating the article $A_i$ to be collected in batch $B_i$ and a predetermined number $n_i$ of the articles $A_i$ to be collected in batch $B_i$. That is, a bill of material B comprises the information $(a_1, n_1), (a_2, n_2), ..., (a_N, n_N)$. Then, N batches $B_i$, i = 1, ..., N are to be collected, wherein batch $B_i$ is determined by $(a_i, n_i)$, i. e. $n_i$ articles $A_i$ identified by $a_i$ are to be collected.

There may exist several possible bills of material B. The bills of material may be stored in the database system 30. Alternatively, the bill of material may be provided via a different source, e. g. via an ERP connection (not shown).

In the example shown in Fig. 1, the BOM is as follows: collect a first batch of $B_1$ of $n_1 = 6$ units of articles identified by $a_1 = 3$, collect a second batch of $n_2 = 12$ units of articles identified by $a_2 = 9$, and collect a third batch $B_3$ of $n_3 = 9$ units of articles identified by $a_3 = 7$. The BOM may include further batches which are not displayed by display means 40 yet.

The system 1 also comprises calculation means 50 for calculating the counting value $C_i$ defined as the absolute value of the difference between the initial weight value $w_i(0)$ of articles $A_i$ and the current weight value $w_i(t_c)$ of articles $A_i$ divided by the second information $w_i$ corresponding to the weight of a single article $A_i$, i. e.

$$C_i = \frac{|w_i(0) - w_i(t_c)|}{w_i} .$$

In the embodiment of the system 1 shown in Fig. 1, the calculation means 50 is incorporated in the device 90, e. g. as part of a computer. However, the calculation means 50 may be a component that is separate from the device 90. The calculation means 50 may be adapted to communicate with the database system 30 to obtain the second information $w_i$. The calculation means 50 communicates with the scale 20 to obtain the initial weight value $w_i(0)$ and the current weight value $w_i(t_c)$.

Furthermore, the system 1 comprises comparing means 60 for comparing the counting value $C_i$ and the predetermined number $n_i$ of articles $A_i$. The comparing means 60 is adapted to communicate with the calculation means 50 to obtain the counting value $C_i$ from the calculation means 50. Furthermore, the comparing means 60 may be adapted to communicate with the database system 30 to obtain the predetermined number $n_i$ of articles $A_i$. In the embodiment shown in Fig. 1, the comparing means 60 is incorporated in the device 90. However, the comparing means 60 may be a component that is separate from the device 90.

The calculation means 50 may be adapted to communicate with the display means 40 so that the display means 40 may display a third information which is a function of the counting value $C_i$.

The comparing means 60 may be adapted to communicate with the display means 40 so that the display means 40 may display a third information which is a function $C_i$ and $n_i$, i.e. information indicating if the correct number of articles $A_i$ is already collected.

The system 1 further comprises article verification means 22 in the form of a bar code reader. The article verification means 22 allows to verify whether the articles $A_i$ arranged on the scale by the operator are indeed identified by the first information $a_i$. To this end, each article $A_i$ may be provided with a bar code. Alternatively, the storage containers 12 from which the articles $A_i$ are taken may be provided with a bar code that can be read by the bar code reader 22.

Additionally or alternatively, the article verification means 22 may provide package verification means for verifying if a selected package is identical to a package identified by a package information $p_i$. The package information $p_i$ may be a bar code attached to a package into which the collected articles are to be packed.

The system 1 further comprises input means in the form of a key board 24 that enable an operator to communicate with the system 1.

In the embodiment shown in Fig. 1, articles indicated by the first information $a_1$ are already arranged on the scale 20. The articles were taken from the storage container 12 labeled with the first information $a_1 = 3$.

In the embodiment depicted in Fig. 1. the display means 40 displays that $n_1 = 6$ units of article $A_1$ identified by the first information $a_1$ are to be collected in batch $B_1$. At starting, an operator has put an initial quantity of the articles $A_1$ on the scale 20 and an initial weight value $w_1(0)$ of the articles $A_1$ was measured. Then, an operator has varied the number of articles $A_1$ on the scale 20. Currently, at time $t_c$, scale 20 measures the current weight value $w_1(t_c)$. This current weight value $w_1(t_c)$, is provided, together with the initial weight value $w_1(0)$ and the second information $w_1$, to the calculation means 50. This second information $w_1$ may be obtained from the data base. The calculation means 50 calculates, for batch $B_1$, the counting value $C_1$ defined as the absolute value of the difference between $w_1(0)$ and $w_1(t_c)$ divided by the weight $w_1$ of the article $A_1$. That is, the calculation means 50 calculates

$$C_1 = \frac{|w_1(0) - w_1(t_c)|}{w_1}.$$

Meanwhile, the comparing means 60 compares, for the given batch $B_1$, the counting value $C_1$ calculated by the calculation means 60 with the predetermined number $n_1$, which is 6 in the present example.

As it was explained above, the display means 40 may display a third information which is a function of the counting value $C_1$. In the present example shown in Fig. 1, the display means 40 is adapted to display whether the counting value $C_i$ corresponds to the predetermined number $n_i$ of articles $A_i$. To this end, the display means 40 may highlight a region of the display containing the first information $a_1$ and the second information $n_1$ when $C_1$ corresponds to $n_1$, as it is shown in Fig. 1. Thereby, it is indicated that the correct predetermined number $n_1$ of articles $A_1$ is arranged on the scale 20. I.e., it is indicated by the display means 40 that batch $B_1$ is completed.

Now, it is possible to continue with the collection of the next batch $B_2$. The first information $a_2$ and the predetermined number $n_2$ for batch $B_2$ is already visible on the display means 40. Batch $B_1$ may be removed from the scale before batch $B_2$ is collected, or it may remain on the scale while batch $B_2$ is collected.

The system 1 further comprises a printer 70 for printing information related to the articles $A_i$ to be collected by the method, e. g. their name, weight, number or any other information related to article $A_i$.

Exemplary embodiments for carrying out the method according to the present invention

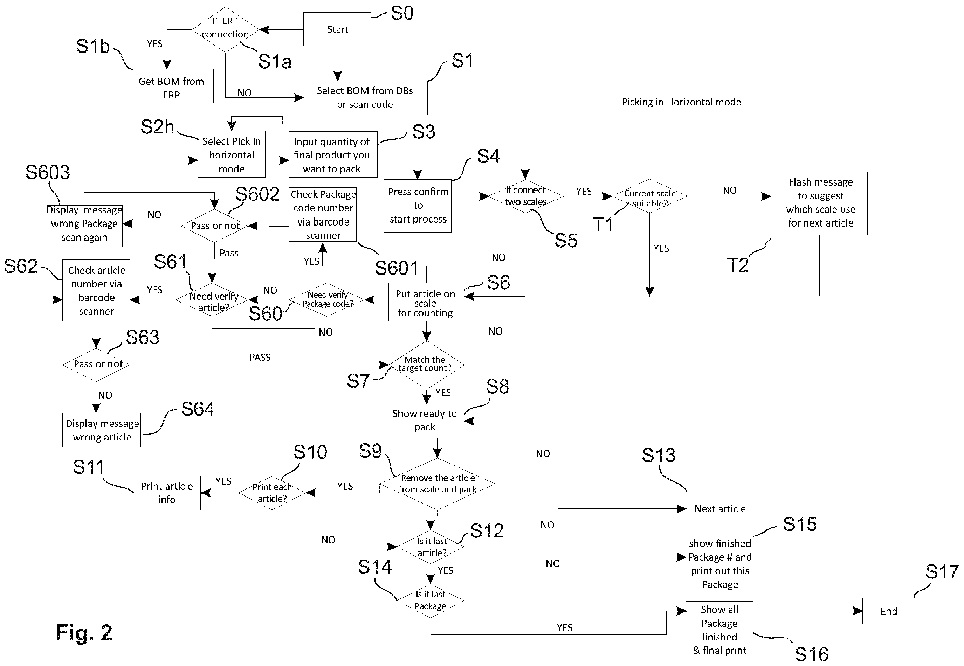

In the following, exemplary embodiments to carry out the method according to the present invention will be described with reference to Figs. 2 to 4. The method may be carried out using a system according to the second aspect of the present invention. I.e., the system may comprise a data base for storing an inventory of a stock of articles, weight measuring means for measuring an initial weight value and a current weight value of articles arranged on the weight measuring means, calculation means for calculating the counting value $C_i$ defined above and comparing means for comparing the counting value $C_i$ with the predetermined number $n_i$ of articles $A_i$ in batch $B_i$. Furthermore, the system may comprise an input unit adapted to receive an input from an operator. The system also comprises an output unit. The output unit may comprise a display. The system may further comprise printing means for printing out information related to the collected batches. The system may also comprise article verification means and package verification means as introduced above.

PICKING-IN HORIZONTAL MODE

In the following, a first embodiment of the method according to the present invention will be explained with reference to Fig. 2. Fig. 2 is a schematic drawing showing a flow chart of the method according to the first embodiment of the present invention. Note that in the following, the term "scale" is used synonymously for any weight measuring means that allows to measure the weight of an article.

The method starts at S0. The flowchart incorporates two versions of the method. In one version, the bill of material/(BOM) is selected from a database or scanned from a bar code (S1). In a second version, there is the further option that the BOM may be obtained via an ERP connection (S1b).

In the case of the first version, an operator selects a bill of material B including information related to the batches $B_i$, $i = 1, ..., N$ of articles $A_i$ to be collected from a stock of articles in a first step S1. As explained above, this BOM includes a first information $a_i$ which identifies the articles $A_i$ to be collected, and a number $n_i$ of the articles $A_i$. That is, the BOM includes a list of tuples $(a_i, n_i)$, $i = 1, ..., N$. This BOM may be stored in a database, e. g. in a data base of the date base system 30 shown in Fig. 1. The system may be adapted to display the possible BOMs on the display means and the operator may be able to select a desired BOM via the input unit. Alternatively, the BOM may be represented as a list on a piece of paper and the operator may input the BOM into the system using the input unit. Alternatively, the BOM may be represented as a barcode that can be scanned by a barcode reader which is part of the input unit.

In the case of the second version, it may further be possible to obtain the BOM via an ERP connection (S1a, S1b). Once the BOM is selected and input into the system, the method proceeds to step S2h.

In step S2h, a particular mode of carrying out the method is selected, which was introduced above as "picking-in horizontal mode". As was already explained above and as will become also clear from the following description, picking-in horizontal mode means that batches $B_i$ of articles are collected by taking articles $A_i$ from a stock, putting them on the scale for counting by a weight measuring operation, and then removing them from the scale. The batches $B_i$ may then be packed into a package.

The selection of the picking-in horizontal mode in step S2h may be performed by the operator. The operator may select the picking-in horizontal mode based on a predetermined information included in the BOM. Alternatively, the operator may choose the picking-in horizontal mode based on his/her own preference. The selection may be performed by a respective input using the input unit.

After the picking-in horizontal mode is selected in step S2h, the method proceeds to step S3.

At S3 it is selected how many collections of articles according to the chosen BOM B are to be prepared. The number of collections of articles according to the chosen BOM will be denoted by K. For example, only one collection of batches of articles may be prepared according to the BOM B (K = 1). Alternatively, K = 2, K = 3 or more identical collections of batches of articles according to the BOM B may be prepared. Each of these identical collections of batches of articles may be packed into an individual package. In this way, two, three or more packages containing identical collections of articles are prepared by the method. The respective number K of identical collections of batches, resp. packages to be prepared is given as an input to the system in step S3, e. g. via the input unit.

Next, the operator must confirm in step S4 that the correct information is provided, i.e. he/she must confirm that, e.g. the BOM and the number of identical collections of batches K which were selected before are correct before the method can proceed to S5.

At S5, it is verified whether the scale comprises one single scale, as it is depicted in Fig. 1, or if the scale comprises two separate scales. Whenever the articles of the batches that are to be collected have very different properties, e. g. very different weight or different size, an embodiment of the method using two scales is preferable. Then, two scales that have e. g. different size or different precision may be used. Scale information $s_i$ identifying which of the two scales (or both) is suitable to measure which articles $A_i$ must be provided. This information may be stored in the database.

If two scales are present, the operator chooses one of the two scales for the weighing step to be carried out in step S6. Based on the choice of the operator it is decided in step T1 whether the scale chosen by the operator is identified by the scale information $s_i$. If the scale chosen by the operator does not correspond to the scale information $s_i$ of batch $B_i$, the system displays in step T2 a message to suggest which scale is to be used for the collection of the next batch $B_i$. This information may be displayed on the display means. Once the correct scale is chosen, the system proceeds to step S6. The method proceeds directly to step S6 if only one scale is used in the method.

Step S6 is the weighing step (counting step). At starting, the operator learns from the BOM, which may be indicated by the display means, which articles $A_i$ identified by the first information $a_i$ are to be collected in the next batch $B_i$. At starting, zero articles $A_i$ are arranged on the scale, i. e. the initial quantity of articles $A_i$ on the scale is zero. Then, the scale measures the initial weight value $w_i(0)$. Optionally, a tare operation may be performed, either via an operator's input or automatically. Next, the operator varies the number of articles $A_i$ on the scale. This variation may be implemented by adding only one or a small number of articles $A_i$ to the articles $A_i$ already present on the scale. This variation may also be implemented by adding a larger number of articles $A_i$ simultaneously to the articles $A_i$ already arranged on the scale. Meanwhile, a current weight value $w_i(t_c)$ of the weight of the articles $A_i$ on the scale is measured by the scale. At the same time, a counting value $C_i$ defined as the absolute value of the difference between the initial weight value $w_i(0)$ measured at the starting of the weighing step and the current weight value $w_i(t_c)$ divided by the weight of the article $A_i$ indicated by the second infor-

mation $w_i$, $$C_i = \frac{|w_i(0) - w_i(t_c)|}{w_i}$$ is calculated.

Meanwhile, the counting value $C_i$ is compared to the predetermined number $n_i$ of articles $A_i$. The counting value $C_i$ may be smaller than $n_i$ or it may become

larger than $n_i$. Then, the number of articles on the scale must be reduced. It is preferable that the system indicates the relation between $C_i$ and $n_i$ while the operator is varying the number of articles $A_i$ on the scale. The relation between the counting value and the predetermined number of articles may be displayed on the display means. For example, the display means may display a first color when $C_i$ is smaller than $n_i$, it may display a second color different from the first color when $C_i$ is larger than $n_i$ and it may display a third color which is different from the first color and from the second color when $C_i$ corresponds to $n_i$. Additionally or alternatively, a bar may be displayed on the display means wherein the length of the bar is proportional to $C_i$. The operator continuous to vary the number of articles $A_i$ on the scale until the counting value $C_i$ corresponds to the predetermined number $n_i$ of articles $A_i$ (S7).

The method may include the possibility that at least some of the collected batches $B_i$ are packed into one or several packages. The package or packages may be selected from a stock of packages. Each package may be provided with a package information or package code $p_i$ which identifies the package. For example, the package information may be the size, volume or material of the package. The package information $p_i$ may be a package information number encoded in a bar code.

Then, to enhance the reliability of the method, the method may include a package verification step at S60. It may be determined by the BOM whether such a package verification step is to be carried out. If the answer is NO, the method proceeds to S61 (see below).

If the answer is YES, the package verification step is carried out at S601, S602 and S603. In the example shown in Fig. 2, this package verification step is implemented by scanning the package code $p_i$ using a bar code scanner (S601). If it is verified at S601 that the selected package is identified by the package information $p_i$ (PASS at S602), the method proceeds to S61.

If at S601 it is determined that the selected package is not identified by the package information $p_i$ (NO at S602), a warning message is displayed at S603 that the wrong package was chosen. The warning message may be a visual message or it may be a warning sound. Then, the operator can correct his/her mistake. The method only proceeds to S61 when it is verified that the correct package is chosen. The article verification step may be carried out before or while the articles are put on the scale, or it may be performed after the articles have been put on the scale.

To further enhance the reliability of the method, the method may comprise an article verification step. The information whether an article verification step is to be carried out may be included in the BOM. In S61 it is decided whether such an article verification step is to be implemented. If the answer is NO, no article verification step is implemented. If the answer is YES, an article verification step is implemented at S62. In the example shown in Fig. 2, this article verification step is implemented by scanning a barcode associated with the article $A_i$ by using a barcode scanner. In case that the article verification step reveals that the operator has chosen an article which is not identified by the first information $a_i$ of batch $B_i$ (S63), a message is displayed that the wrong article was chosen by the operator (S64). For example, this information may be provided visually on the display means. Alternatively, the system may output a warning sound. Then, the operator can correct his or her mistake. The verification of the articles may be performed before or while the articles are put on the scale or it may be performed after the articles have been put on the scale. The method only proceeds to S7 when it could be confirmed in the article verification step that the articles $A_i$ identified by the first information $a_i$ were chosen by the operator.

When $C_i$ corresponds to the predetermined number $n_i$ of articles $A_i$ to be collected in batch $B_i$ (S7), it is indicated at S8 that batch $B_i$ is completed. The information that batch $B_i$ is completed and ready to pack may be displayed on the display means. Then, the method proceeds to S9.

The picking-in horizontal mode requires that the completed batch $B_i$ is removed from the scale. At S9 it is verified whether the completed batch $B_i$ is indeed removed from the scale. For example, the scale may continue to measure the current weight value $w_i(t_c)$. If this current weight value $w_i(t_c)$ becomes zero, no articles are left on the scale. The method only proceeds if all articles are removed from the scale (YES at S9).

After the articles are removed from the scale, information related to each article $A_i$ collected in batch $B_i$ may be printed out, if desired (S10 and S11). For example, the first information $a_i$ (e.g. an article number), the predetermined number $n_i$, etc. may be printed out. Whether the printing step is to be carried out or not may be determined by the BOM.

Then, the method proceeds to S12, where it is verified whether the recently collected batch was the last batch $B_N$ according to the BOM. If the recently collected batch $B_i$ was not the last batch according to the BOM, the method continuous with the collection of the next batch $B_{i+1}$ of articles $A_{i+1}$ (step S13). Therefore, the method returns to step S5, and the method continuous as described above until it is decided in step S12 that the recently collected batch was the last batch $B_N$ according to the BOM. Then, the method continues at S14.

As it was explained above, the operator can select in step S3 the number K of identical collections of articles that are to be prepared by the method. Thus, at S14 the number k of already prepared collections of articles is compared with K. If k = K, the last collection, resp. package, was prepared.

If k < K at S14 (NO), i.e. if a further collection of articles according to the BOM is to be prepared, the method proceeds to S15. The number of completed collections or packages k is displayed on the display means and information related to this package is printed out.

Then, the method returns to step S5.

If k = K at S14 (YES), i.e. if no further collection of articles according to the BOM is to be prepared, the method proceeds to S16.

At S16 it is indicated that all packages are completed and the final information regarding the packages is printed. Then the method ends at S17.

PICKING-IN VERTICAL MODE

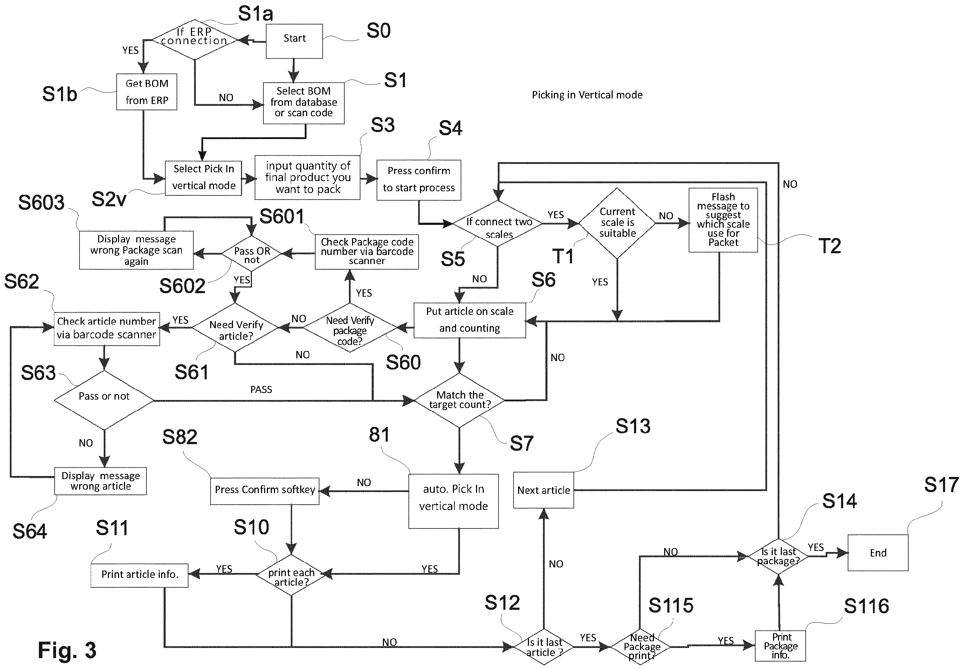

A second embodiment of the method according to the present invention will now be explained with reference to Fig. 3.

As for the first embodiment, the method starts with the selection of a bill of material (BOM) from a database or with the scan of a barcode containing the BOM in step S1, or the BOM is obtained via an ERP connection. The steps S1, S1a and S1b of the second embodiment are identical to the steps S1, S1a and S1b of the first embodiment, and their description is thus omitted.

In step S2v, a particular mode of carrying out the method according to the present invention is selected, which will be denoted as "picking-in vertical mode". As was already described above and will become further apparent from the description below, this mode is different from the picking-in horizontal mode in that completed batches $B_i$ remain on the scale, e. g. collected in a package, and are not removed from the scale as in the first embodiment of the method. At S2v it may also be selected whether an automatic mode or a non-automatic mode of the picking-in vertical mode (see below) is to be carried out.

After the selection of the picking-in vertical mode at S2v, the method proceeds as in the first embodiment with S3, S4, S5, optionally T1 and T2, to step S6. The steps S3, S4, S5, T1, T2 are identical to the steps S3, S4, S5, T1 and T2 of the first embodiment, and thus their description is omitted.

Step S6 is the weighing step of the method according to the invention used for collecting batch $B_i$. As in the picking-in horizontal mode, zero articles $A_i$ are arranged on the scale at the starting of the weighing step. However, as will become apparent from the further description of the second embodiment of the method according to the present invention, previously collected batches of articles may be present on the scale, e. g. collected in a package.

At starting of the weighing step, an initial weight value $w_i(0)$ is determined. Since previously collected batches of articles $A_i$ may be present on the scale, the initial weight value $w_i(0)$ may be larger than zero. A tare operation may be carried out, either automatically or after receiving an input from an operator. Then, step S6 is carried out similarly to step S6 of the picking-in horizontal mode. That is, after the measurement of the initial weight value $w_i(0)$, the number of articles $A_i$ on the scale is varied until the counting value $C_i$ as defined above corresponds to the predetermined number $n_i$ of articles $A_i$ of batch $B_i$

(S7).

Optionally, a package verification step may be carried out at S60, S601, S602 and S603. This package verification and the steps S60, S601, S602 and S603 are identical to the steps S60, S601, S602 and S603 described above in relation to the package verification step of the picking-in horizontal mode, and the description is therefore omitted.

Optionally, an article verification step may be carried out at S61, S62, S63 and S64. This article verification and the steps S61, S62, S63 and S64 are identical to the steps S61, S62, S63 and S64 described above in relation to the article verification step of the picking-in horizontal mode, and the description is therefore omitted.

When at S7 the counting value $C_i$ corresponds to the predetermined number $n_i$ of articles $A_i$ of batch $B_i$, it is decided at S81 if an automatic mode or a non-automatic mode was selected.

The method according to the second embodiment of the present invention may be implemented in two versions, an automatic mode and a non-automatic mode. If the non-automatic mode is selected, the operator must confirm in step S82 that the counting value $C_i$ corresponds indeed to the predetermined number of articles $n_i$. For example, the relation between $C_i$ and $n_i$ may be displayed on the display means. Then, the operator must confirm that $C_i$ corresponds to $n_i$, e.g. by pressing a confirmation soft key in step S82. Then, the method proceeds to S10.

When the automatic mode of the method is implemented, the method proceeds to step S10 as soon as the counting value $C_i$ corresponds to the predetermined number $n_i$ of articles $A_i$. An operator input is not necessary.

At S10 it is decided as for the picking-in vertical mode whether article information is to be printed out in step S11 before proceeding to S12, or whether the method directly proceeds to S12. It may be determined by the BOM if the printing is to be carried out or not.

At S12, it is verified, as for the picking-in horizontal mode, whether the recently collected batch was the last batch $B_N$ according to the BOM. If the recently collected batch $B_i$ was not the last batch according to the BOM, the method continuous with the collection of the next batch $B_{i+1}$ of articles $A_{i+1}$ (step S13). Therefore, the method returns to step S5, and the method continuous as described above until the recently collected batch is the last batch $B_N$ according to the BOM (YES at S12). Then, the method continues at S115.

At S115 it is decided whether information related to the completed collection of batches, resp. package, is to be printed out. If this is the case (YES), this printing operation of the package information is carried out at S116. Then the method proceeds to step S14. Otherwise the method proceeds to S14 immediately without a printing operation.

As for the picking-in horizontal mode, the operator can select in step S3 that K identical collections of articles, resp. packages to be packed, are to be prepared by the method. Thus, at S14 the number k of already prepared collections of articles is compared with K.

If k < K (NO), i.e. if a further collection of articles according to the BOM is to be prepared, the method returns to step S5.

If k = K (YES), i.e. if no further collection of articles according to the BOM is to be prepared, the method terminates at S17.

PICKING-OUT MODE

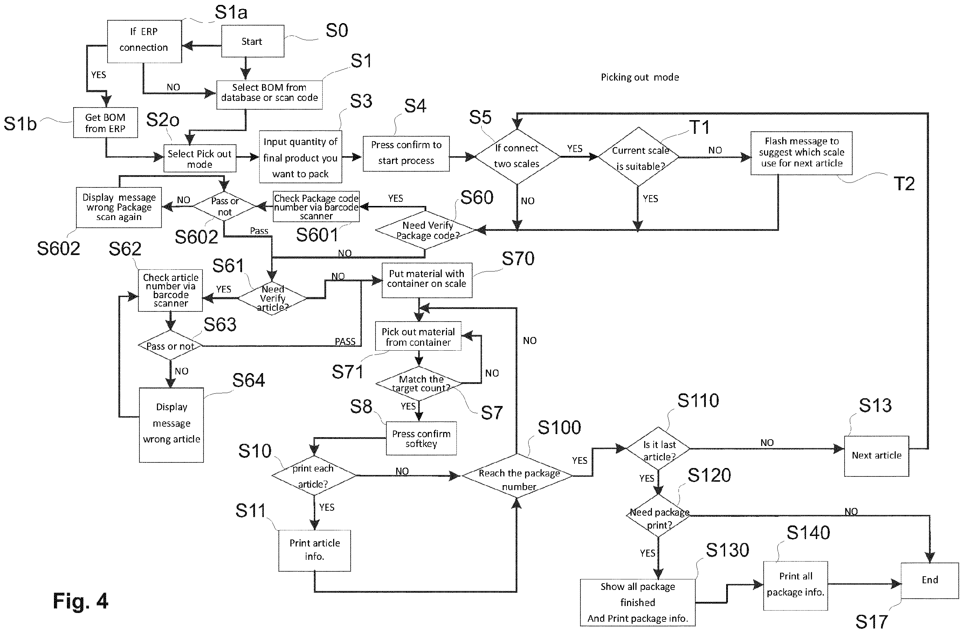

Next, a third embodiment according to the method of the present invention will be explained with reference to Fig. 4.

As for the first and second embodiments, the method starts with the selection of a bill of material (BOM) at S1, S1a, S1b. The steps S1, S1a and S1b of the third embodiment are identical to the steps S1, S1a and S1b of the first and the second embodiment, and their description is thus omitted.

At S2o, a particular mode of carrying out the method according to the present invention is selected, which will be denoted as "picking-out mode". As it was already explained above and will become further apparent from the description below, this method is called "picking-out mode" since articles stored in a storage container which is arranged on the scale are taken out of the storage container to form the batches $B_i$.

The method proceeds with S3, S4, S5 and optionally T1 and T2, as in the first and second embodiments of the method. The steps S3, S4, S5, T1 and T2 are identical to the steps S3, S4, S5, T1 and T2 of the first and the second embodiments, and their description is thus omitted.

Next, the method proceeds to S60, where it is decided whether a package verification is to be carried out. It may be determined by the BOM if a package verification is to be carried out. If the answer is YES, the steps S601, S602 and S603 are carried out as described for the picking-in modes of Figs 2 and 3. When it is verified that the right package was chosen or when no package verification is to be carried out, the method proceeds to S61.

The method allows to carry out an article verification step (S61), as in the first and second embodiment. If the article verification step is to be performed (YES), the method proceeds with steps S62, S63 and S64 as in the first and the second embodiment before proceeding to step S70. The steps S62, S63 and S64 are identical to the corresponding steps in the first and second embodiment, and their description is thus omitted. Otherwise (NO), the system proceeds directly to step S70. It may be determined by the BOM if an article verification is to be carried out.

At S70, the operator arranges a storage container containing articles $A_i$ to be collected in batch $B_i$ on the scale. That is, the initial quantity of articles $A_i$ on the scale is identical to the number of articles $A_i$ in the storage container. Generally, this initial quantity of articles $A_i$ is unknown. However, the initial quantity of articles may also be known. However, the initial number of articles in the storage container should be larger than the predetermined number $n_i$ of articles $A_i$ to be collected in batch $B_i$.

Next, the scale measures the initial weight value $w_i(0)$. The initial weight value $w_i(0)$ is at least as large as the total weight of the articles $A_i$ in the storage container and the weight of the storage container.

At S71, the operator starts to remove articles from the storage container. That is, the operator takes articles $A_i$ out of the storage container and places them next to the scale, preferably inside a package. Meanwhile, the scale measures the current weight value $w_i(t_c)$ of the storage container and the articles $A_i$ remaining in the container. This current weight value $w_i(t_c)$ is smaller than the initial weight value $w_i(0)$. While the current weight value $w_i(t_c)$ is measured, the counting value $C_i$ defined above is calculated.

The counting value $C_i$ may be larger or smaller than the predetermined number $n_i$ of articles $A_i$ to be collected in batch $B_i$. If $C_i$ is smaller than $n_i$, the operator continues to remove articles $A_i$ from the storage container (and from the scale). However, the operator may also remove too many articles from the container so that the counting value $C_i$ becomes larger than $n_i$. Then, the operator puts articles $A_i$ previously removed from the storage container back into the storage container.

While the operator varies the number of articles in the storage container as explained above, it is monitored (S7) whether the counting value corresponds to the predetermined number $n_i$ of articles $A_i$ of batch $B_i$. When the counting value $C_i$ corresponds to $n_i$, this information is indicated to the operator. The operator then stops the variation of the number of articles in the container.

Then, at S82, the operator must confirm that the counting value $C_i$ corresponds indeed to the predetermined number $n_i$ of articles $A_i$ to be collected in batch $B_i$, e.g. by pressing a soft key.

Next, the system proceeds to S10. Here it is verified whether a printing operation is to be carried out in step S11 or not. It may be determined by the BOM whether the printing operation is to be carried out or not. If no printing operation is carried out (NO), the method proceeds immediately to step S100. Otherwise (YES), article information is printed out in step S11, and the method proceeds to step S100.

As it was explained above, the operator can select in step S3 that K > 1 identical collections of articles resp. packages to be packed are to be prepared by the method. Here, the picking-out mode differs from the two picking-in modes explained above in the order in which the identical collections of batches of articles are prepared. As it was explained above, for the two picking-in modes, a first collection of batches of articles according to the BOM B is finished before a second collection of batches of articles according to the BOM B is started. In contrast, in the picking-out mode, if K copies of collections of batches $B_i$, i = 1, ...N, according to a BOM B are to be prepared, first K identical batches $B_1$ are to be collected. Next, K identical batches $B_2$ are collected, and so on.

This difference between the picking-out mode and the two picking-in modes is reflected in S100. If K copies of collections of batches according to the BOM are to be collected, the method determines in step 100 how many identical batches $B_i$ have already been prepared. If fewer than K identical batches were collected (NO), the method returns to step S71. I.e., the storage container remains on the scale. Again, the initial weight value $w_i(0)$ of the total number of articles $A_i$ remaining in the container and the weight of the container are determined. Optionally, a tare operation may be performed. Then, articles $A_i$ are again removed from the container and gathered at a location which is different from the location where the previous batch $B_i$ was gathered. For example, the first batch is gathered in a first package, the second batch is gathered in a second package, and so forth. Then, the method returns via steps S7, S82, S10, optionally step S11 to step S100.

If, however, it is determined at step S100 that K identical batches $B_i$ have been prepared, the method proceeds to step S110. Here it is decided if all batches according to the BOM have been prepared. If the answer is NO, the method continues with the collection of the next batch $B_{i+1}$ (S13) and returns to S5.

If the answer is YES, i.e. all batches have been collected (and each batch $B_i$ was collected K times), the method continues to S120 where it is decided whether information related to the finished packages should be printed out in step S130.

If the answer is YES, it is displayed that all packages are finished, and information related to each package (S130) and all packages (S140) is printed out before the method ends at S17. Otherwise (NO at S120), the method terminates directly at S17.

## Claims

1. A method for collecting N > 1 batches $B_i$, i = 1, ..., N of predetermined numbers $n_i$ of identical articles $A_i$ from a stock of articles on the basis of a first information $a_i$ which identifies the article $A_i$ and a second information $w_i$ which indicates the weight of the article $A_i$,
   wherein each of said batches $B_i$ is collected by a weighing step comprising a weighing operation of articles $A_i$ identified by said first information $a_i$ to be collected in batch $B_i$, said weighing operation starting with some initial quantity of articles $A_i$, and then varying the number of articles $A_i$ until a counting value $C_i$ defined as the absolute value of a difference between an initial weight value $w_i(0)$ measured at the starting of the weighing operation and a current weight value $w_i(t_c)$ divided by the weight of the article $A_i$ indicated by the second information, $w_i$,

   $$C_i = \frac{|w_i(0) - w_i(t_c)|}{w_i},$$ corresponds to said predetermined number $n_i$ of articles $A_i$ of batch $B_i$, whereby the collection of batch $B_i$ is completed,
   and starting the collection of a next batch $B_{i+1}$ of identical articles $A_{i+1}$ only after the collection of batch $B_i$ is completed.

2. The method according to claim 1, wherein for at least one weighing step the number of articles $A_i$ in the initial quantity of articles $A_i$ is zero.

3. The method according to claim 1 or 2, wherein for at least one weighing step the number of articles $A_i$ in the initial quantity of articles $A_i$ is equal to or larger than the predetermined number $n_i$ of articles $A_i$ of batch $B_i$.

4. The method according to claim 2 or 3, wherein for at least one weighing step the number of articles in the initial quantity of articles $A_i$ is chosen based on the batches $B_i$ to be collected.

5. The method of any of the preceding claims, wherein the method comprises, for at least one batch $B_i$, an article verification step wherein it is verified whether the articles weighed in the weighing step are identical to the articles $A_i$ identified by the first information $a_i$.

6. The method according to any of the preceding claims, wherein the method comprises a package selection step in which a package for receiving the articles $A_i$ of at least some of the batches $B_i$ is selected from a stock of packages based on a given package information $p_i$ identifying the package to be selected, and wherein the method further comprises a package verification step wherein it is verified whether the package selected in the package selection step is identical to the package identified by the given package information $p_i$.

7. The method of any of the preceding claims, wherein a third information which is a function of the counting value $C_i$ and/or a fourth information which is a function of the number of completed batches $B_i$ is displayed on a display means.

8. The method according to any of the preceding claims, wherein the method comprises prior to at least one weighing step, a weight measuring means selection step in which a weight measuring means for carrying out the weighing operation of the following weighing step is selected from a set of weight measuring means.

9. A system for collecting N > 1 batches $B_i$, i = 1, ..., N of predetermined numbers $n_i$ of identical articles $A_i$ from a stock of articles on the basis of a first information $a_i$ which identifies the article $A_i$ and a second information $w_i$ which indicates the weight of the article $A_i$, the system comprising:

   - a database for storing an inventory of a stock of articles, said inventory including, for each article $A_i$ in the stock, said first information $a_i$ and said second information $w_i$;
   - weight measuring means for measuring for a given batch $B_i$ at a starting point, an initial weight value $w_i(0)$ of an initial quantity of articles $A_i$ identified by said first information $a_i$ and for measuring, at a later point in time $t_c$, a current weight value $w_i(t_c)$;
   - calculation means for calculating for a given batch $B_i$ a counting value $C_i$ defined as the absolute value of the difference between the initial weight value $w_i(0)$ and the current weight value $w_i(t_c)$ divided by the weight of the article $A_i$ identified by the second information $w_i$,

   $$C_i = \frac{|w_i(0) - w_i(t_c)|}{w_i} \ ;$$

   - comparing means for comparing, for a given batch $B_i$, the counting value $C_i$ calculated by the calculation means with the predetermined number $n_i$ of articles $A_i$ of said batch $B_i$.

10. The system according to claim 9, wherein the system further comprises means for creating and/or for storing bills of material of collections of batches $B_i$.

11. The system according to claim 9 or 10, wherein the system further comprises display means for displaying the first information $a_i$ corresponding to a batch $B_i$ and/or the predetermined number $n_i$ of articles $A_i$ of batch $B_i$ and/or the second information $w_i$ and/or a third information which is a function of the counting value $C_i$ and/or a fourth information which is a function of the number of collected batches $B_i$.

12. The system according to any one of claims 9 to 11, wherein the system further comprises article verification means for verifying whether an article $A_i$ to be weighed by the weight measuring means is identical to an article $A_i$ identified by the first information $a_i$ and/or package verification means for verifying whether a package selected for receiving at least one batch $B_i$ is identical to a package identified by a predetermined package information $p_i$.

13. The system according to any one of claims 9 - 12, wherein the weight measuring means comprises two or more weight measuring means.

14. A computer program for collecting N > 1 batches $B_i$, i = 1, ..., N of predetermined numbers $n_i$ of identical articles $A_i$ from a stock of articles on the basis of a first information $a_i$ which identifies the article $A_i$ and a second information $w_i$ which indicates the weight of the article $A_i$, the computer program comprising instructions which, when the program is executed by a computer, cause the computer to carry out the following steps:

   - retrieving, for a batch $B_i$, the first information $a_i$ and the second information $w_i$ from a data base;
   - retrieving, for the given batch $B_i$, from a weight measuring means at a starting point an initial weight value $w_i(0)$ of an initial quantity of articles $A_i$ to be collected in said batch $B_i$, the articles $A_i$ being identified by said first information $a_i$, and, at a later point in time $t_c$ a current weight value $w_i(t_c)$;
   - calculating, for the given batch $B_i$, a counting value $C_i$ defined as the absolute value of the difference between the initial weight value $w_i(0)$ and the current weight value $w_i(t_c)$ divided by the weight of the article $A_i$ identified by the sec-

   $$C_i = \frac{|w_i(0) - w_i(t_c)|}{w_i} \ ;$$

   ond information $w_i$,
   - comparing the counting value $C_i$ and the predetermined number $n_i$ of articles $A_i$ of said batch $B_i$, and if the counting value $C_i$ corresponds to the predetermined number $n_i$, providing an output to an output means that $C_i$ corresponds to $n_i$; and
   - returning to retrieving the first information $a_{i+1}$ and the second information $w_{i+1}$ of a next batch $B_{i+1}$ only after it is determined that the counting value $C_i$ corresponds to the predetermined number $n_i$ of articles $A_i$ of batch $B_i$.

15. A computer readable data carrier having stored thereon the computer program of claim 14.

Fig. 1

Fig. 2

Picking in Horizontal mode

S0 — Start

S1a — If ERP connection?
- YES → S1b — Get BOM from ERP
- NO → S1 — Select BOM from DBs or scan code

S3 — Input quantity of final product you want to pack

S2h — Select Pick In horizontal mode

S4 — Press confirm to start process

S5 — If connect two scales?
- YES → T1 — Current scale suitable?
  - YES → (proceed)
  - NO → T2 — Flash message to suggest which scale use for next article
- NO → S6 — Put article on scale for counting

S601 — Check Package code number via barcode scanner

S602 — Pass or not?
- Pass → S60 — Need verify Package code?
  - YES → (to S601)
  - NO → S61 — Need verify article?
- NO → S603 — Display message wrong Package scan again

S61 — Need verify article?
- YES → S62 — Check article number via barcode scanner
- NO → S7 — Match the target count?

S62 → S63 — Pass or not?
- PASS → S7
- NO → S64 — Display message wrong article

S7 — Match the target count?
- YES → S8 — Show ready to pack
- NO → (back)

S8 — Show ready to pack

S9 — Remove the article from scale and pack
- YES → S10 — Print each article?
  - YES → S11 — Print article info
  - NO → S12 — Is it last article?
- NO → S12

S12 — Is it last article?
- YES → S14 — Is it last Package?
- NO → S13 — Next article → S15 — show finished Package # and print out this Package

S14 — Is it last Package?
- YES → S16 — Show all Package finished & final print → S17 — End
- NO → S15

18

Fig. 3

S1a — If ERP connection

S0 — Start

S1 — Select BOM from database or scan code

S1b — Get BOM from ERP (YES)

NO

S2v — Select Pick In vertical mode

S3 — input quantity of final product you want to pack

S4 — Press confirm to start process

Picking in Vertical mode

S5 — If connect two scales

S603 — Display message wrong Package scan again

S601 — Pass OR not

Check Package code number via barcode scanner

S602 — YES

S62 — Check article number via barcode scanner (YES)

S61 — Need Verify article?

NO

S60 — Need Verify package code?

YES

S6 — Put article on scale and counting

T1 — Current scale is suitable

T2 — Flash message to suggest which scale use for Packet (NO)

YES

NO

S63 — Pass or not

PASS

S7 — Match the target count?

NO

S64 — Display message wrong article (NO)

S82 — Press Confirm softkey

81 / S81 — auto. Pick In vertical mode

S13 — Next article

S11 — Print article info.

S10 — print each article? (YES)

YES

S12 — Is it last article?

S115 — Need Package print?

S116 — Print Package info.

S14 — Is it last package?

S17 — End

YES

NO

Fig. 4

EP 3 767 566 A1

Europäisches
Patentamt

European
Patent Office

Office européen
des brevets

# EUROPEAN SEARCH REPORT

**Application Number**

EP 19 18 7211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/112089 A1 (VIATOUCH MEDIA INC [US]) 21 June 2018 (2018-06-21) * page 7, line 17 - page 8, line 20 * ----- | 1-15 | INV. G06Q10/08 |
| X | US 2002/173983 A1 (ANDERSON MICHELLE [US] ET AL) 21 November 2002 (2002-11-21) * paragraphs [0015] - [0025] * ----- | 1-15 | |

**TECHNICAL FIELDS SEARCHED (IPC)**

G06Q

The present search report has been drawn up for all claims

| Place of search | Date of completion of the search | Examiner |
|---|---|---|
| Munich | 5 September 2019 | Falò, Luca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                     EP 19 18 7211

This annex lists the patent family members relating to the patent documents cited in  the above-mentioned European search report.
The members are as contained in the European Patent Office EDP file on
The European Patent Office is in no way liable for these particulars which are merely given for the purpose of information.

05-09-2019

| Patent document cited in search report | | Publication date | Patent family member(s) | | Publication date |
|---|---|---|---|---|---|
| WO 2018112089 | A1 | 21-06-2018 | CN<br>WO | 110073381 A<br>2018112089 A1 | 30-07-2019<br>21-06-2018 |
| US 2002173983 | A1 | 21-11-2002 | NONE | | |

EPO FORM P0459

For more details about this annex : see Official Journal of the European Patent Office, No. 12/82